# EUROPEAN PATENT APPLICATION

(11) **EP 2 721 930 A1**
(43) Date of publication of application: **23.04.2014**
(21) Application number: 12189243.4
(22) Date of filing: 19.10.2012
(51) Int. Cl.: A01N 1/02

(54) **Solution for cryopreservation, method of manufacturing the same, and its use**

(71) Applicant: Serumwerk Bernburg AG, 06406 Bernburg (DE); Fraunhofer-Gesellschaft zur Förderung der angewandten Forschung e.V., 80686 München (DE)
(72) Inventor: Weidhase, Reinhard Albrecht, 06420 Könnern (DE); Stolzing, Alexandra, 04299 Leipzig (DE); Naaldijk, Yahaira, 04299 Leipzig (DE)
(74) Representative: Sokolowski, Fabian

(57) **Abstract**

The invention relates to a solution for cryopreservation, comprising 0.5 to 15 % hydroxyethyl starch and 0.1 to 1.0 mol/I of a polyol carrying between 4 and 15 hydroxyl groups in an isotonic buffer solution, wherein the solution is free of dimethylsulfoxide. The invention further relates to a method for producing such a solution and a use of such a solution as well as to a method for cryopreserving isolated cells.

## Description

The instant invention relates to a solution for cryopreservation according to the preamble of claim 1, a method for producing such a solution according to the preamble of claim 12, the use of such a solution according to claim 13 and a method for cryopreserving isolated cells according to the preamble of claim 14.

Isolated cells, like, e.g., mesenchymal stem cells (MSCs) of a eukaryotic organism are regularly isolated from tissues like bone marrow, peripheral blood, umbilical cord blood and umbilical cord itself, adipose tissue, periosteum, deciduous teeth, amniotic fluid and membranes and fetal tissues. Isolated MSCs from all these sources are able to differentiate towards cell types of the mesodermal lineage. The immune phenotype of MSCs, lacking expression of main histocompartibility complex II and co-stimulatory molecules are regarded as immunosuppressive. All these characteristics make MSCs an indispensable source for cell replacement therapy of degenerative age-dependent or trauma-associated conditions.

Banking of MSCs by cryopreservation provides the opportunity to have controlled MSC batches ready for allogenic transplantation. Umbilical cords represent a readily available source of MSCs which is usually discarded directly after birth, containing MSCs with a higher proliferation capacity compared to bone marrow derived MSC, especially when isolated from aged donors.

Dimethylsulfoxide (DMSO) is the most commonly used cryoprotectant, because of its high-membrane permeability. Fetal bovine serum (FBS) is regularly used in combination with DMSO in order to stabilise cell membrane and to adjust osmotic pressure. These two components are the most common cryoprotectors for MSCs, however both have disadvantages. DMSO is known to cause various side-effects including neurological damage, gastrointestinal effects, mutations and others. Fetal bovine serum is also undesirable as it carries the risk of transmitting viral diseases and it may initiate immune responses, however the alternative use of autologous serum is time-consuming.

It is an object of the present invention to provide a novel cryoprotection solution in order to overcome the before-mentioned disadvantages known from prior art, wherein it still enables high viability and high recovery rates of cryopreserved cells.

This object is achieved by a solution having the features according to claim 1. Such a solution for cryopreservation comprises 0.5 to 15 % hydroxyethyl starch and 0.1 to 1.0 mol/I of a polyol carrying 4 to 15 hydroxyl groups. These ingredients are solved in an isotonic buffer solution, wherein the solution is free of dimethylsulfoxide. All percentages indicated in the instant application are to be understood as percent by weight (mass percent), unless indicated to the contrary and unless "%" is to be understood as the unit of a certain value which cannot be percent by weight by definition.

Such a solution provides very good performance with respect to cryopreservation although it does not contain dimethylsulfoxide like cryopreservation solutions known from prior art. The specific amounts of hydroxyethyl starch and the polyol enable a very good stability of cells stored in such a solution at low temperatures.

Suited alternative concentrations of hydroxyethyl starch are 1 to 14 %, in particular 2 to 13 %, in particular 3 to 12 %, in particular 4 to 11 %, in particular 5 to 10 %, in particular 6 to 9 %, and very particular 7 to 8 %

Suited alternative concentrations of the polyol are 0.2 to 0.9 mol/l, in particular 0.3 to 0.8 mol/l, in particular 0.4 to 0.7 mol/l, and very particular 0.5 to 0.6 mol/l.

In an embodiment, the polyol carries exactly 4, 5, 6, 7, 8, 9, 10, 11, 12, 13, 14 or 15 hydroxyl groups.

In an embodiment, the cryopreservation solution is also free of fetal calf serum or free of any serum like, e.g., fetal calf serum (FCS), or other proteins. In a further embodiment, the solution consists only of the before-mentioned ingredients and does not contain additional ingredients.

In another embodiment, the solution additionally comprises between 0.5 and 15 % dextran. Suited alternative concentrations of dextran are 1 to 14 %, in particular 2 to 13 %, in particular 3 to 12 %, in particular 4 to 11 %, in particular 5 to 10 %, in particular 6 to 9 %, and very particular 7 to 8 %.

The inventors were able to show that solutions comprising hydroxyethyl starch, a polyol, dextran and an isotonic buffer in the above-mentioned concentration ranges is very well suited for cryopreservation and can replace conventional cryopreservation solutions containing dimethylsulfoxide and/or fetal calf serum without any limitations regarding their cryopreserving performance.

In a further embodiment, the cryopreservation solution consists only of the before-mentioned ingredients (i.e. hydroxyethyl starch, polyol, dextran and an isotonic buffer) without any further supplements.

Preferably, the combined concentration of hydroxyethyl starch and dextran lies in the range of from 1.0 to 20 %. In other words, both hydroxyethyl starch and dextran preferably make up together 1 to 20 % of the cryopreservation solution. Suited alternative concentrations for the sum of hydroxyethyl starch and dextran are in the range of 2 to 15 %, in particular 3 to 12 %, in particular 4 to 11 %, in particular 5 to 10 %, in particular 6 to 9 % and very particular 7 to 8 %.

Examples for suited polyols are aldehydic sugars and sugar alcohols. In a preferred embodiment, the polyol is chosen such that it essentially does not influence the oxidative stress of a eukaryotic cell being exposed to said polyol. Speaking generally, the oxidative stress for a cell is higher if it is exposed to an aldehydic sugar instead of a sugar alcohol. Therefore, in a preferred embodiment, the polyol is sugar alcohol. In another preferred embodiment, the polyol is not glucose and not fructose.

In a further embodiment, the sugar alcohol is a hexose, i.e. a aldehydic sugar or sugar alcohol containing six carbon atoms. Sugar alcohols made up of six carbon atoms are preferred. Thereby, it can bear, e.g., six hydroxyl groups. However, also sugar alcohols having four carbon atoms, five carbon atoms, seven carbon atoms, eight carbon atoms, nine carbon atoms, 10 carbon atoms, 11 carbon atoms, 12 carbon atoms, 13 carbon atoms, 14 carbon atoms or 15 carbon atoms are well suited as sugar alcohol. The number of hydroxyl group can be identical to the respective number of carbon atoms in the chosen sugar alcohol. However, it can also be higher or lower than the number of carbon atoms. For example, a sugar alcohol can be chosen bearing n carbon atoms and n+1, n+2, n-1 or n-2 hydroxyl groups.

Very well suited sugar alcohols for the claimed solution are erythritol, threitol, arabitol, xylitol, ribitol, mannitol, sorbitol, galactitol, fucitol, iditol, inositol, volemitol, isomalt, maltitol, and lactitol. Mannitol and/or sorbitol are particularly preferred.

In an embodiment, the isotonic buffer solution is a Ringer's solution, a lactated Ringer's solution or an acetated Ringer's solution. A person skilled in the art is familiar with the composition of such solutions. Whereas very good results could be achieve when using a Ringer's solution, a lactated Ringer's solution or an acetated Ringer's solution as isotonic buffer solution, other isotonic buffer solutions having a factual osmolarity of 250 to 350 mOsm/l at 25°C, in particular 260 to 340 mOsm/l, in particular 270 to 330 mOsm/l, in particular 275 to 320 mOsm/l, in particular 280 to 310 mOsm/l, and very particular 290 to 300 mOsm/l, are well suited buffer solutions for the claimed solution for cryopreservation.

In a further embodiment, the solution for cryopreservation comprises unmodified or modified gelatine, in particular gelatine polysuccinate. For example, a solution sold under the trademark Gelafusal comprising 4 % modified liquid gelatine in acetated Ringer's solution is a very well suited supplemented isotonic buffer solution to be used for the claimed solution for cryopreservation. The specific composition of Gelafusal is as follows: 1000 ml infusion solution contain as active ingredients 40.00 g gelatine polysuccinate (weight average molecular weight of 30000 g/mol, degree of succinylation: 0.026 [amount of succinic acid amide groups per amino acid]) in acetated Ringer's solution containing 3.675 g sodium acetate trihydrate, 4.590 g sodium chloride, 0.403 g potassium chloride, 0.133 g calcium chloride dihydrate, 0.203 g magnesium chloride hexahydrate and 0.980 g sodium hydroxide at a pH value of 7.1 to 7.7.

In an embodiment, the solution for cryopreservation consists only of hydroxyethyl starch, a polyol, optionally dextran, and a gelatine-supplemented isotonic buffer solution, e. g. Gelafusal.

In a further embodiment, a high molecular weight dextran is used. Such a dextran has a weight average molecular weight of 400 000 g/mol or more. Well suited dextrans are dextrans having a molecular weight of 450 000 g/mol or more, in particular 500 000 g/mol or more and very particular 550 000 g/mol or more. It turned out that such high molecular weight dextrans show a better performance than low molecular weight dextrans having a weight average molecular weight of ca. 5.000 g/mol.

The molecular weight of the hydroxyethyl starch appears to be not as important as the molecular weight of dextran for a good performance of the claimed solution for cryopreservation. Hydroxyethyl starches having a molecular weight of 200 000 g/mol or 450 000 g/mol appeared to be equally well suited.

In an embodiment, the solution for cryopreservation is manufactured like an infusion solution. After dissolution of hydroxyethyl starch and a polyol carrying 4 to 15 hydroxyl groups (and optionally any further component) in water the solution is filtrated sterile, filled into containers, and heated in an autoclave. The kinematic viscosity of the solution at 20°C is preferably located in the range from 2 to 100 mm²/s, in particular from 5 to 90 mm²/s, in particular from 10 to 80 mm²/s, in particular from 20 to 70 mm²/s, in particular from 30 to 60 mm²/s and very particular from 40 to 50 mm²/s. For determining the kinematic viscosity, an Ubbelohde capillary viscosimeter is used according to method 2.2.9 of the European Pharmacopoeia.

The invention relates also to a method for producing a solution according to the previous explanations. When carrying out this method, hydroxyethyl starch and a polyol carrying 4 to 15 hydroxyl groups as well as the ingredients for an isotonic buffer (and optionally any further component) are weighed-in in a first step. If necessary, the weights are calculated taking into account the loss on drying of the substances.

In a second step, the components are dissolved (at first electrolytes, i.e. the ingredients for the isotonic buffer solution) in water, preferably in water for injection. This can be done in stirrer vessels of glass or high-grade steel. Preferably, the dissolution is carried out at temperatures of 40 °C or more, in particular 50 °C or more, in particular 60 °C or more, in particular 70 °C or more, and very particular 80 °C or more. Alternatively, the isotonic buffer solution can be prepared independently so that the components can be directly dissolved in buffer. The quality of the components and of the solvent water for injection preferably complies with the corresponding monographs of the European Pharmacopoeia.

In a third step, sterile filtration of the solutions takes place. This can preferably be done with the help of membrane modules with membrane pore sizes of around 0.2 µm.

In a forth step, the solutions are filled into bottles, preferably infusion bottles. Preferably, infusion bottles of glass or polypropylene are used.

In a fifth step, the bottles are sealed. Preferably, hollow stoppers of butyl rubber and bordered caps of aluminium are used for sealing.

In a sixth step, the bottles are heated in an autoclave at at least 121 °C (temperature of the solution) at least for 15 minutes. Temperatures of 133 °C or higher can also be applied. The higher the temperature, the shorter is the necessary time for autoclaving.

The invention relates also to the use of a solution as explained above as cryopreservation solution for cryopreserving isolated cells. Thereby, the cryopreservation solution is both suited for prokaryotic and eukaryotic cells. In an embodiment, the use is limited to cryopreserving eukaryotic cells, like, e.g., mesenchymal stem cells. These cells or mesenchymal stem cells can originate, e.g., from mouse, rat, monkey, dog, pig, sheep, human or mammals in general or rodents in general.

The invention further relates to a method for cryopreserving isolated cells, wherein the cells to be cryopreserved are mixed with a solution according to the explanations above as cryopreservation solution and are then put directly into the vapour phase of vaporising liquid nitrogen. This method enables a very fast cooling of the cells to be cryopreserved and saves much time as compared to other cryopreservation protocols which often require very sophisticated temperature gradients to be followed. However, when comparing the instantly claimed quick cooling approach to classical temperature protocols, it surprisingly turned out that no significant viability advantage of cells can be observed if the cells are cooled-down according to a special temperature protocol. Rather, putting the cells directly into the vapour phase of liquid nitrogen results in essentially the same viability of the cells, at least when the instantly claimed solution is used as cryopreservation solution.

This method can be applied, e.g., to cells which are suspended in the cryopreservation solution as well as to cells in their adherent state (in which no real suspension is possible). Thus, the claimed cryopreservation method can be applied to cells irrespective of their actual state so that a broad area of application is accessible.

Preferred embodiments of the claimed solution can also be applied to the claimed methods and to the claimed use in an analogous manner and vice versa.

The instantly claimed invention will now be explained in more detail with respect to exemplary embodiments and according Figures. In the Figures:
- Figure 1: shows the viability of cryopreserved isolated human mesenchymal stem cells in different cryopreservation solutions,
- Figure 2: shows the viability of human mesenchymal stem cells in DMSO-free cryopreservation solutions containing different sugar alcohols,
- Figure 3: shows the viability of human mesenchymal stem cells in cryopreservation solutions containing different dextrans,
- Figure 4: shows the viability of rat mesenchymal stem cells cryopreserved under different temperature protocols at a first time point,
- Figure 5: shows the viability of rat mesenchymal stem cells cryopreserved under different temperature protocols at a second time point and
- Figure 6: shows a graphical representation of the different temperature protocols applied to the cells in the experiments of Figures 4 and 5.

For obtaining the results depicted in the following Figures, mesenchymal stem cells have been isolated, cryopreserved and thawed according to the following general methods. Specific embodiments of these methods or deviations from these general methods will be explained in the following, if necessary.

### Isolation and culture of mesenchymal stem cells (MSCs)

Human MSCs were isolated from umbilical cords (UCs). All human material was obtained with parental consent. UCs were stored in phosphate buffered saline (PBS) and processed within 8 h after delivery. UCs were washed with PBS and transferred to petri dishes, cut into pieces of approximately 1cm in diameter. Pieces from 1 UC were transferred then to 2-3 culture dishes and left without medium for 10-15 min to attach. After that time 20 ml medium (Dulbecco's modified Eagle's medium (DMEM, 1 g/l D-Glucose) containing 10 % fetal bovine serum (FBS) and 1 % penicillin/streptomycin was added to each dish. Medium was changed every 2 days until outgrowth from the pieces were visible. Then the pieces were transferred to a new dish. Up to 3 transfers of pieces can be performed. Dishes with outgrowth were left for some time to allow expansion of the cells, which on this step counted as being on passage 0. For the cryopreservation experiments MSCs on passage 1 to 3 were used.

For obtaining rat MSCs, a rat (Sprague Dawley, 2-3 month old, male) was killed by controlled inhalation of CO₂. The hind legs were removed, the soft tissue removed and the separated bones (tibia, femur) were stored in PBS. The bones were centrifuged at 1000 rpm for 5 min and bone marrow was resuspended in 1 ml DMEM.

Cells obtained from each animal were distributed into two T75 flasks and incubated at 37°C. The first medium change was done after 5 days and afterwards every 2 to 3 days. For the experiments MSCs from passage 1 to passage 3 were used.

Rat MSCs were cultured in 1x DMEM containing 10% fetal bovine serum (FBS, Hyclone) and 1% penicillin/streptomycin (pen/strep, Invitrogen).

### Cryopreservation

MSCs were frozen when they reached 80 % confluence. Cell number was determined by trypan blue staining using a Neubauer haemocytometer. Final volume of cells with cryoprotectant was 500 µl. Each cryovial contained 1x10⁵ MSCs. HES with a weight average molecular weight of 200 and 450 kDa, sorbitol, mannitol and dextran with a weight average molecular weight of 5, 450 and 500 kDa were used. All components were diluted either in acetated Ringer's solution (Ringer acetate solution, RAS), Gelafusal (4 % modified liquid gelatine in RAS) or DMEM. Cells were frozen using a programmed rate freezer or by directly pouring them into the vapour phase of evaporating liquid nitrogen. When using a programmed rate freezer, different cooling programmes were used. In the most frequently used program, cooling started at 4 °C with a cooling rate of 1 °C/min until -30°C, then 5 °C until -80°C. Afterwards, the MSCs were transferred into the gas phase of a liquid nitrogen tank. Thawing was performed in a water bath at 37 °C.

### Viability assessment

After thawing, cells were stained with trypan blue and counted again with a Neubauer chamber. Percent of viable cell cells was calculated as a relation of live unstained cells to number of frozen cells (5 x 10⁵). Or when day 3 data was shown, it was done using MTT ((3-(4,5-Dimethylthiazol-2-yl)-2,5-diphenyltetrazolium bromide).

### Statistics

All experiments were repeated at least three times with three different donors. Statistical analysis was performed using ANOVA followed by Turkey test, with p < 0.05 considered statistically significant using Sigma Plot.

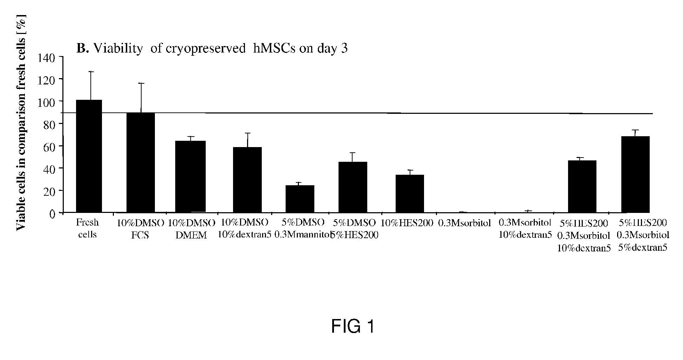

Figure 1 shows the results of an experiment in which mesenchymal stem cells were frozen with different solutions to identify the best cryopreservation solution. Cell viability was measured on day 0 and day 3. Since no statistically significant difference could be determined on day 0, Figure 1 depicts only the results obtained on day 3. "Day 3" denotes that the cells were cryopreserved on day 0 and then stored on day 1 and day 2 under cryopreservation conditions to be then thawed on day 3 to assess their viability.

Figure 1 shows the viability results for cells cryopreserved in different cryopreservation solutions. The viability of fresh cells is set to 100 % and is used as control (left column). From left to right, the following cryopreservation solutions have been used: 10 % DMSO in fetal calf serum, 10 % DMSO in DMEM, 10 % DMSO and 10 % dextran (molecular weight: 5 000 g/mol) in acetated Ringer's solution, 5 % DMSO and 0.3 mol/I mannitol in acetated Ringer's solution, 5 % DMSO and 5 % hydroxyethyl starch (molecular weight 200 000 g/mol) an acetated Ringer's solution, 10 % hydroxyethyl starch (molecular weight 200 000 g/mol) in acetated Ringer's solution), 0.3 mol/I sorbitol in acetated Ringer's solution, 0.3 mol/I sorbitol and 10 % dextran (molecular weight 5 000 g/mol) in acetated Ringer's solution, 5 % hydroxyethyl starch (molecular weight 200 000 g/mol), 0.3 g/mol sorbitol and 10 % dextran (molecular weight 5 000 g/mol), 5 % hydroxyethyl starch (molecular weight 200 000 g/mol) and 0.3 g/mol sorbitol and 5 % dextran (molecular weight 5 000 g/mol).

As can be easily seen, use of a sugar alcohol alone or a sugar alcohol in combination with dextran is not suited for a cryopreservation solution. However, using a combination of hydroxyethyl starch, a polyol like sorbitol and dextran leads to quite high cell viability so that such a composition is well suited for a cryopreservation solution. The same holds true for a solution containing only hydroxyethyl starch and sorbitol in acetated Ringer's solution (data not shown).

Thus, these results clearly indicate that dimethylsulfoxide or fetal calf serum is - in contrast to the prevailing opinion - not a necessary ingredient of a cryopreservation solution.

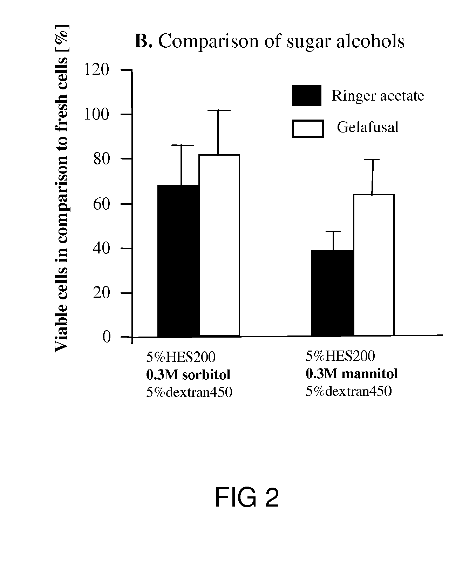

Figure 2 shows the results of a viability assay on day 3, wherein different cryopreservation solutions have been used. The cryopreservation solutions contained in each case 5 % hydroxyethyl starch (molecular weight 200 000 g/mol) and 5 % dextran (molecular weight 450 000 g/mol). However, two of the tested solutions contained 0.3 mol/I sorbitol and further two solutions contained 0.3 mol/I mannitol. A further variation concerns the chosen isotonic buffer system. Two solutions contained acetated Ringer's solution as buffer solution, whereas two other solutions contained Gelafusal (i.e. modified gelatine in acetated Ringer's solution) as buffer solution. As can be seen from Figure 2, the use of Gelafusal instead of pure acetated Ringer's solution enhances the cell viability. In addition, the use of sorbitol instead of mannitol also enhances the cell viability. Nonetheless, a solution of hydroxyethyl starch, mannitol and dextran is a well suited cryopreservation solution, in particular when Gelafusal is used as isotonic buffer solution.

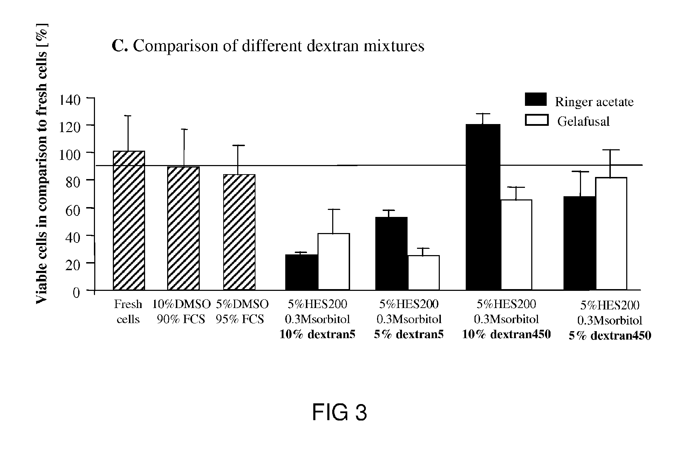

Figure 3 shows the results of the viability assay focussing on different dextrans. The viability of fresh cells is set to 100 % and used as control. Classical cryopreservation solutions known from prior art, namely 10 % DMSO in fetal calf serum and 5 % DMSO in fetal calf serum are depicted for comparison. It can be seen that dextran having a molecular weight of 450 000 g/mol is better suited as ingredient for a cryopreservation solution than dextran having a molecular weight of 5 000 g/mol, since it leads to a higher cell viability. In addition, in case of dextran having a molecular weight of 450 000 g/mol, a concentration of 10 % leads to better results than a concentration of 5 %. The influence of the different dextran concentrations is higher than the influence of use of Gelafusal instead of acetated Ringer's solution as isotonic buffer solution. When measuring errors are considered, a solution of 5 % hydroxyethyl starch, 0.3 mol/I sorbitol and dextran (molecular weight 450 000 g/mol) enables a cell viability which is identical to the cell viability achieved with a classical cryopreservation solution containing 10 % DMSO in fetal calf serum. However, the above-explained disadvantages of dimethylsulfoxide and fetal calf serum are avoided.

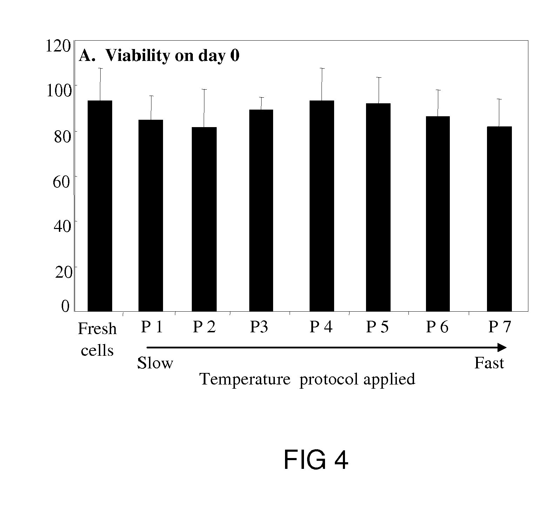

Figure 4 shows the cell viability on day 0 of rat mesenchymal stem cells which were cooled down using different temperature protocols. Thereby, protocol P1 is a very slow temperature protocol, i.e. it applies a very flat gradient. In contrast, program P7 is a very fast temperature protocol applying a steep temperature gradient. No significant viability differences can be observed between the single temperature protocols tested.

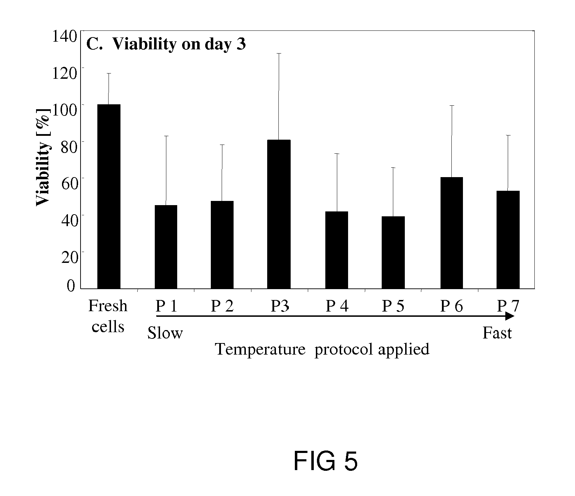

Figure 5 is a graphical depiction of the results of a viability assay performed on day 3. Once again, no statistic significant differences between the single temperature protocols can be observed.

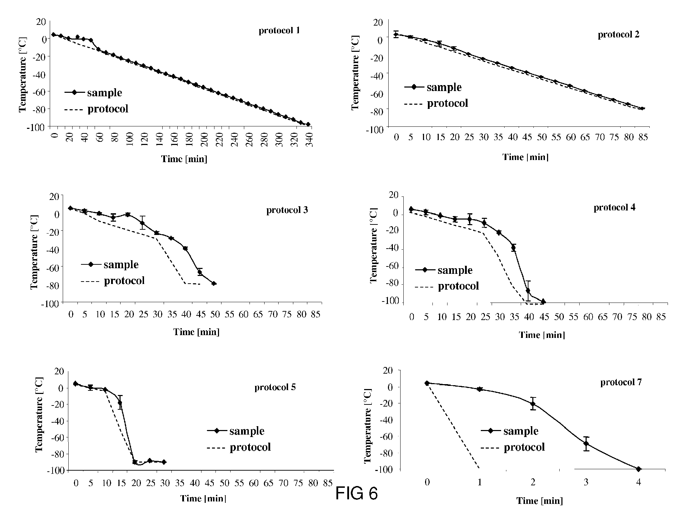

Figure 6 graphically depicts the different temperature protocols P1 to P7 referred to in Figures 4 and 5. The different scale of the x-axis should be noted.

The results depicted in Figures 4 to 6 clearly indicate that it is not necessary to apply a very slow temperature protocol for achieving good cell viability. Rather, cooling down the cells quick leads to comparable viability results and saves a lot of time and therewith money in laboratory routine.

## Claims

1. Solution for cryopreservation, comprising
● 0.5 to 15 % hydroxyethyl starch and
● 0.1 to 1.0 mol/I of a polyol carrying 4 to 15 hydroxyl groups
in an isotonic buffer solution, wherein the solution is free of dimethylsulfoxide.

2. Solution for cryopreservation according to claim 1, **characterized in that** it additionally comprises 0.5 to 15 % dextran.

3. Solution for cryopreservation according to claim 2, **characterized in that** the amount of hydroxyethyl starch and dextran is in the range of 1.0 to 15 %.

4. Solution for cryopreservation according to any of the preceding claims, **characterized in that** the polyol is a polyol that does essentially not influence the oxidative stress of a eukaryotic cell being exposed to said polyol.

5. Solution for cryopreservation according to any of the preceding claims, **characterized in that** the polyol is a sugar alcohol.

6. Solution for cryopreservation according to claim 5, **characterized in that** the sugar alcohol is a hexose.

7. Solution for cryopreservation according to claim 5 or 6, **characterized in that** the sugar alcohol is chosen from the group consisting of erythritol, threitol, arabitol, xylitol, ribitol, mannitol, sorbitol, galactitol, fucitol, iditol, inositol, volemitol, isomalt, maltitol, and lactitol.

8. Solution for cryopreservation according to any of the preceding claims, **characterized in that** the isotonic buffer solution is a Ringer's solution, a lactated Ringer's solution or an acetated Ringer's solution.

9. Solution for cryopreservation according to any of the preceding claims, **characterized in that** it comprises unmodified or modified gelatine, in particular gelatine polysuccinate.

10. Solution for cryopreservation according to any of claims 2 to 9, **characterized in that** the dextran has a weight average molecular weight of 400 000 g/mol or more.

11. Solution for cryopreservation according to any of the preceding claims, **characterized in that** it has a viscosity in the range from 2 to 100 mm²/s measured at 20 °C.

12. Method for producing a solution according to any of the preceding claims, **characterized by** the following steps:
● weighing-in hydroxyl ethyl starch, a polyol carrying 4 to 15 hydroxyl groups and ingredients for an isotonic buffer solution as components,
● dissolving the components in water,
● sterile filtrating the solution,
● filling the solution into bottles,
● sealing the bottles, and
● heating the bottles in an autoclave at at least at 121 °C at least for 15 minutes.

13. Use of a solution according to any of claims 1 to 11 as cryopreservation solution for cryopreserving isolated cells.

14. Method for cryopreserving isolated cells, **characterized in that** the cells to be cryopreserved are mixed with a solution according to any of claims 1 to 11 as cryopreservation solution and are directly put into the vapour phase of vaporising liquid nitrogen.
